# EUROPEAN PATENT APPLICATION

(11) **EP 4 678 977 A1**
(43) Date of publication of application: **14.01.2026**
(21) Application number: 23926477.3
(22) Date of filing: 27.12.2023
(51) Int. Cl.: F22B 37/56, F16T 1/48, F22B 37/00, F22B 37/10

(54) **METHOD FOR FEEDING CHEMICAL TO STEAM SYSTEM**

(30) Priority: 03.03.2023 JP 2023032905
(71) Applicant: Kurita Water Industries Ltd., Tokyo 164-0001 (JP)
(72) Inventor: MORI, Shintarou, Tokyo 164-0001 (JP); UCHIDA, Kazuyoshi, Tokyo 164-0001 (JP)
(74) Representative: TBK
(86) International application number: PCT/JP2023/046987
(87) International publication number: WO 2024/185273

(57) **Abstract**

Provided is a chemical injection method for steam system for controlling injection of water treatment chemicals into a steam system, in which, in response to a pressure sensor, a temperature sensor, or a steam trap as a steam circulation detection part provided in the steam system; a chemical injection pump for injecting the water treatment chemicals into the steam system; and a steam circulation detection status of the steam circulation detection part, the injection of the water treatment chemicals by the chemical injection pump is controlled.

## Description

### Technical Field

The disclosure relates to a chemical injection method for injecting chemicals into a steam system.

### Related Art

Chemicals are injected into steam systems in order to maintain the efficiency or to protect air supply piping and equipment that uses steam generated from a boiler (steam generator).

Generally, two purposes for chemical injection into steam systems may be mentioned: corrosion prevention in the steam condensate system of steam generation equipment and improvement of heating efficiency in heat exchangers.

To prevent corrosion in the steam condensate system of steam generation equipment, anticorrosive components such as volatile neutralizing amines like morpholine or film-forming amines etc. are added alone to boiler feedwater, condensate system, or makeup water system. Alternatively, boiler chemicals, in which anticorrosive components such as volatile neutralizing amines or film-forming amines etc., are liquefied together with the anticorrosive agents for the boiler body, may be added.

In this case, since a portion of the corrosion inhibiting substance remains in the boiler water, it was necessary to add an excessive amount of chemicals, which was uneconomical. Additionally, in systems where the chemical is not desired to be present in the steam (for example, steam humidification systems or processes performing direct steam heating), the chemical may be carried along with the steam.

Therefore, these corrosion inhibitors are sometimes directly added to the steam system (Patent Document 1).

Here, in many cases, expensive steam flow meters are not installed in steam lines, and corrosion inhibitors are often injected in a constant amount without establishing an interlock for the chemical injection device. In this case, despite the target equipment being stopped and no steam flowing, the corrosion inhibitor continues to be injected. When steam is supplied again, the chemical diffuses at high concentration inside the system, which may cause odor problems etc.

Additionally, in cases where boiler steam is branched for use, despite the target equipment being stopped and no steam flowing, the corrosion inhibitor continues to be injected. When steam is supplied again, the chemical diffuses at high concentration inside the system, which may cause odor problems etc.

For the purpose of improving heating efficiency in steam-type heat exchangers, chemicals such as polyamines etc. may be used (Patent Document 2).

In this case as well, there is no steam flow meter, and despite the target equipment being stopped, the chemical injection device cannot be interlocked, so an excessive amount of chemical may be added, causing odor problems or clogging of strainers due to the generation of adhesive substances.

### Citation List

### Patent Literature

Patent Document 1: Japanese Patent Application Laid-Open Publication No. 2004-69182
Patent Document 2: Japanese Patent Application Laid-Open Publication No. 2019-56524

### SUMMARY OF INVENTION

### Technical Problem

The disclosure, in consideration of the above-mentioned conventional circumstances, aims to provide a chemical injection method capable of appropriately injecting chemicals into a steam system while suppressing costs.

### Solution to Problem

The summary of the disclosure is as follows.
[1] A chemical injection method for steam system for controlling injection of water treatment chemicals into a steam system, in which, in response to a pressure sensor, a temperature sensor, or a steam trap as a steam circulation detection part provided in the steam system; a chemical injection pump for injecting the water treatment chemicals into the steam system; and a steam circulation detection status of the steam circulation detection part, the injection of the water treatment chemicals by the chemical injection pump is controlled.
[2] In the chemical injection method for steam system according to [1], the steam circulation detection part is a sensor including the pressure sensor or the temperature sensor, and in which the chemical injection pump is operated when a detected value of the sensor is equal to or higher than a threshold, and the chemical injection pump is stopped when the detected value of the sensor is below the threshold.
[3] In the chemical injection method for steam system according to [1], the steam circulation detection part includes the steam trap and a steam circulation detection sensor of the steam trap, and the chemical injection pump is operated when the steam circulation detection sensor detects steam circulation, and the chemical injection pump is stopped when the steam circulation detection sensor does not detect the steam circulation.
[4] In the chemical injection method for steam system according to any one of [1] to [3], an anti-siphon check valve is provided in a chemical injection piping that leads the water treatment chemicals from the chemical injection pump to the steam system.
[5] In the chemical injection method for steam system according to any one of [1] to [4], an installation location of the steam circulation detection part in the steam system, and an injection point of the water treatment chemicals from the chemical injection pump into the steam system are located on a secondary side of a steam flow control valve provided in the steam system.
[6] In the chemical injection method for steam system according to any one of [1] to [5], at an injection point of the water treatment chemicals from the chemical injection pump into the steam system, the water treatment chemicals are injected into the steam system by spraying with a spray nozzle.

### Effects of Invention

Steam systems are typically always pressurized with steam or heated during operation of boilers and heat exchanger equipment, so their pressure and temperature are high. However, when the boiler operation stops, the temperature of the steam system decreases, and the steam volume inside the steam system reduces or the steam condenses into water, resulting in a significant pressure drop in the steam system.

The disclosure provides steam circulation detection part in the steam system, and controls the chemical injection of water treatment chemicals in response to the steam circulation status detected by the steam circulation detection part.

In one aspect of the disclosure, a pressure sensor or a temperature sensor is provided in the steam system, and the chemical injection pump is operated when a detected value of the pressure sensor or the temperature sensor is equal to or higher than a threshold, and the chemical injection pump is stopped when the detected value of the sensor is below the threshold.

In another aspect of the disclosure, the steam circulation detection part of the steam system includes a steam trap and a steam circulation detection sensor of the steam trap, and the chemical injection pump is operated when the steam circulation detection sensor detects steam circulation of the steam trap, and the chemical injection pump is stopped when the steam circulation detection sensor does not detect steam circulation.

According to the disclosure, by stopping the addition of water treatment chemicals to the steam system when steam delivery to the steam system is stopped, it is possible to prevent problems caused by excessive addition of chemicals. Moreover, it is advantageous both economically and from a feasibility perspective because excessive chemicals can be prevented when during equipment stoppage.

### BRIEF DESCRIPTION OF DRAWINGS

[FIG. 1] is a system diagram of a boiler system according to an embodiment.
[FIG. 2] is a system diagram of a boiler system according to an embodiment.
[FIG. 3] is a system diagram of a boiler system according to an embodiment.
[FIG. 4] is a system diagram of a boiler system according to an embodiment.

### DESCRIPTION OF THE EMBODIMENTS

In the disclosure, the steam system includes, but is not limited to, piping or headers for sending steam from a boiler etc., as well as heat exchangers etc. to which steam is supplied.

In one aspect of the chemical injection method for steam system of the disclosure, a pressure sensor or temperature sensor provided in the steam system that delivers steam to the manufacturing process, a chemical injection pump for injecting water treatment chemicals into the steam system, and a chemical injection control device that performs injection control of water treatment chemicals in response to signals from the pressure sensor or temperature sensor are used, and the addition amount of the chemical injection pump is adjusted according to the detected value of the pressure sensor or temperature sensor.

In one aspect of the disclosure, ON/OFF control is performed in which the chemical injection pump is turned ON in the case of the detected value of the pressure sensor or temperature sensor being equal to or higher than a preset threshold, and the chemical injection pump is turned OFF in the case of it being below the threshold.

In another aspect of the disclosure, the steam circulation detection part of the steam system includes the steam trap and a steam circulation detection sensor of the steam trap, and the chemical injection pump is operated in the case where the steam circulation detection sensor detects steam circulation in the steam trap, and the chemical injection pump is stopped in the case where the steam circulation detection sensor does not detect steam circulation.

As for the steam trap, any type may be used, such as mechanical steam traps, thermostatic steam traps, thermodynamic steam traps, etc.

Examples of mechanical steam traps include bucket-type mechanical steam traps and lever-equipped float-type mechanical steam traps.

Examples of thermostatic steam traps include bellows-type thermostatic steam traps and bimetallic-type thermostatic steam traps.

Examples of thermodynamic steam traps include disc-type thermodynamic steam traps and air-insulated thermodynamic steam traps.

As the steam circulation detection sensor for detecting steam circulation in the steam trap, a vibration sensor for detecting vibrations that occurs when the steam trap is opened and closed, a temperature sensor for detecting the steam trap temperature that increases as steam circulates through the steam trap, an acoustic sensor for detecting sound generated from the steam trap due to steam circulation to the steam trap, and the like may be used.

In the disclosure, to prevent excessive chemicals from being drawn into the steam system even if the steam system becomes negatively pressurized during equipment stoppage, it is preferable to provide an anti-siphon check valve in the chemical injection line from the chemical injection pump to a chemical injection point.

In one aspect of the disclosure, the pressure sensor, temperature sensor, steam trap, and chemical injection point are installed on the secondary side (downstream side in the steam circulation direction) of the steam flow control valve provided in the steam system.

Moreover, in the case where water treatment chemicals are added to the entire steam flow from the boiler rather than to a part of the steam system, the boiler may be operated in DSS (Daily Start and Stop) or WSS (Weekly Start and Stop) mode. In such DSS or WSS operations, in the case where the addition of water treatment chemicals to the steam system is stopped during boiler stoppage, the pressure sensor, temperature sensor, steam trap, or chemical injection point may be installed in locations other than the secondary side of the steam flow control valve. For example, the pressure sensor, temperature sensor, steam trap, or chemical injection point may be installed before and after a main steam valve immediately after the boiler body, in the steam header, or immediately before the heat exchanger.

The pressure sensor and the chemical injection point may be in close proximity or separated. Additionally, in the case where multiple heat exchanger equipment are installed and operate independently, it is desirable to provide pressure sensors and chemical injection points individually.

The chemical is preferably in the form of a solution or dispersion and is preferably sent to the chemical injection point by the chemical injection pump.

In one aspect of the disclosure, at the chemical injection point, the water treatment chemicals are sprayed and dispersed into the steam system using a spray nozzle.

In the disclosure, to prevent the check valve and chemical injection piping (hose) from deteriorating due to heat from the steam system, it is desirable to provide them at a sufficient distance from the steam system or to provide a loop part in the middle of the chemical injection piping.

As examples of water treatment chemicals to be added to the steam system, corrosion inhibitors as described in Patent Document 1, and heating efficiency improvement agents as described in Patent Document 2 etc. may be cited.

Specifically, this anticorrosion inhibitor may be any of a film-forming anticorrosive agent that forms a film on the piping to prevent corrosion, a neutralizing anticorrosive agent that neutralizes acidic substances contained in water to prevent corrosion, and a composite anticorrosive agent that combines a film-forming anticorrosive agent and a neutralizing anticorrosive agent.

As the heating efficiency improvement agent, long-chain fatty acid amines, for example, polyamines represented by the following general formula (1) may be cited.

R¹-[NH-(CH₂)ₘ]ₙ-NH₂ ... (1)

In formula (1), R¹ represents a saturated or unsaturated hydrocarbon group having 10 to 22 carbon atoms, m is an integer of 1 to 8, and n is an integer of 1 to 7. In the case where n is 2 or more, multiple NH-(CH₂)ₘ may be the same or different.

The embodiments will be described in more detail below with reference to the drawings.

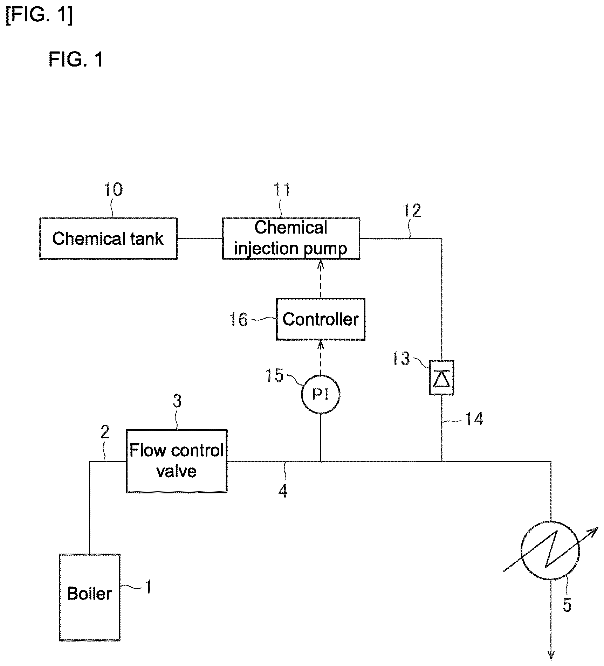

FIG. 1 is a configuration diagram of a boiler system to which a chemical injection method for steam system according to an embodiment is applied.

In FIG. 1, steam from a boiler 1 is delivered through a piping 2, passes through a flow control valve 3, and is delivered to a heat exchanger 5 via a piping 4.

The chemical solution from a chemical tank 10 is supplied to the chemical injection nozzle (not shown) of the piping 4 via a chemical injection pump 11, a piping 12, an anti-siphon check valve 13, and a piping 14, and sprayed in the piping 4 for chemical injection.

A pressure sensor 15 is provided on the piping 4, and its detection signal is input to a controller 16. The controller 16 controls the chemical injection pump 11.

The controller 16 performs ON/OFF control to turn ON the chemical injection pump 11 when the detected value of the pressure sensor 15 is equal to or higher than a preset threshold, and to turn OFF the chemical injection pump 11 when it is lower than the threshold.

Moreover, one chemical injection pump may be controlled based on the detection signal from one pressure sensor, or multiple chemical injection pumps may be controlled based on the detection signal from one pressure sensor.

The same applies in the case of using a temperature sensor instead of the pressure sensor 11.

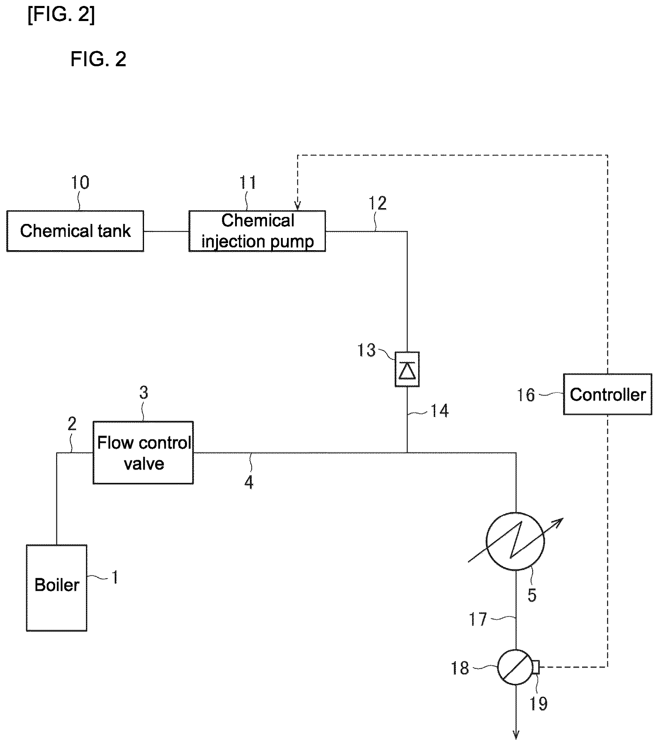

FIG. 2 is a configuration diagram of a boiler system to which a chemical injection method according to another embodiment of the disclosure is applied.

In this embodiment shown in FIG. 2, the pressure sensor 15 is omitted. In this embodiment, a steam trap 18 is installed in a piping 17 for steam on the secondary side, i.e., the downstream side of the heat exchanger 5. A steam circulation detection sensor 19 for the steam trap 18 is provided on this steam trap 18, and the detection signal from this steam circulation detection sensor 19 is input to the controller 16. The controller 16 operates the chemical injection pump 11 in the case where the steam circulation detection sensor 19 detects steam circulation in the steam trap 18, and stops the chemical injection pump 11 in the case where the steam circulation detection sensor 19 does not detect steam circulation.

As mentioned earlier, for the steam circulation detection sensor 19, it is possible to use a vibration sensor that detects vibrations occurring in response to the opening and closing of the steam trap 18, a temperature sensor that detects the temperature rise of the steam trap 18 accompanying steam circulation to the steam trap 18, an acoustic sensor that detects sound generated from the steam trap 18 due to steam circulation to the steam trap 18, etc.

The other configurations in FIG. 2 are the same as those in FIG. 1, and the same reference numerals indicate the same parts.

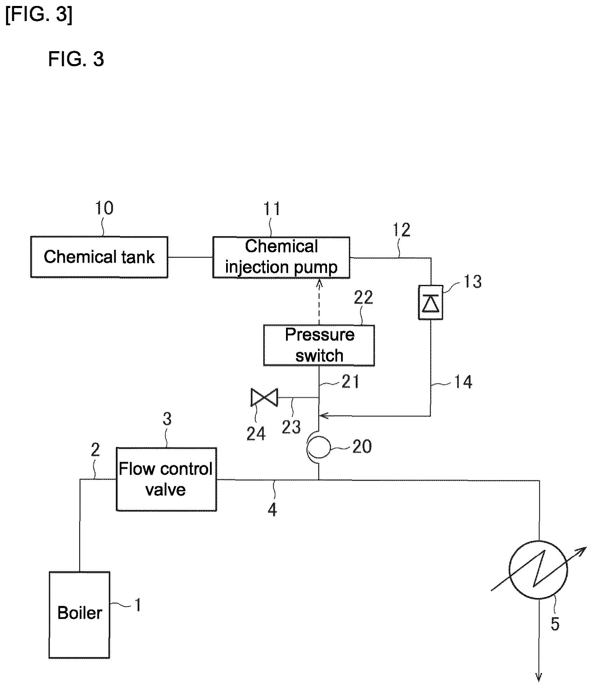

FIG. 3 is a configuration diagram of a boiler system to which a chemical injection method according to yet another embodiment of the disclosure is applied. The boiler system in FIG. 3 omits the pressure sensor 15 and the controller 16 from the boiler system in FIG. 1, and instead installs a pressure switch 22.

In FIG. 3, one end of a siphon tube 20 is connected to the piping 4, and the other end of this siphon tube 20 is connected to the pressure switch 22 via a piping 21.

A piping 23 branches off from the piping 21, and an air release valve 24 is provided at a tip of this piping 23. Moreover, although not shown in the drawing, a pressure gauge is provided on the piping 21.

The piping 14 that leads the chemical solution from the chemical injection pump 11 is connected to this piping 21.

The siphon tube 20 is provided to reduce the heat transmitted from the piping 4 to the pressure switch 22 and the check valve 13, thereby protecting these components.

The other configurations in FIG. 3 are the same as those in FIG. 1, and the same reference numerals indicate the same parts.

In FIG. 3, in the case where the pressure transmitted to the pressure switch 22 via the piping 21 is equal to or higher than a predetermined pressure, the pressure switch 22 activates the chemical injection pump 11, and in the case where the pressure is lower than the predetermined pressure, it stops the operation of the chemical injection pump 11.

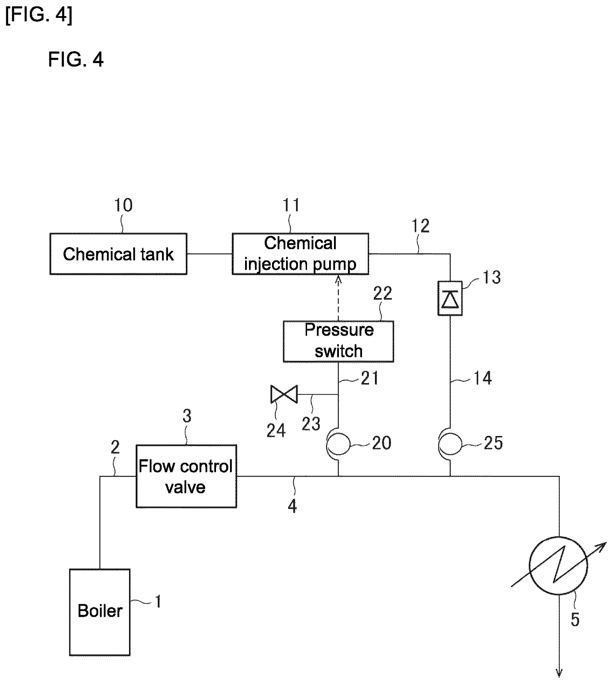

In FIG. 3, the piping 14 for chemical injection is connected to the piping 21, but as shown in FIG. 4, the piping 14 may be configured to directly inject chemicals into the piping 4 via a siphon tube 25. The siphon tube 25 is provided to reduce the transmission of heat from the piping 4 to the check valve 13.

The other configurations in FIG. 4 and the control method of the chemical injection pump 11 are the same as those in FIG. 3, and the same reference numerals indicate the same parts. Example

### [Example 1]

A boiler system with the configuration as shown in FIG. 1 was operated from Monday to Friday with a steady-state steam generation rate of 10g/hr and a normal operating pressure of 0.78MPa. The boiler operation was stopped on weekends (Saturday and Sunday).

As the water treatment chemicals in the chemical tank 10, an 80 mass% aqueous solution of aminomethylpropanol was used. A diaphragm pump was used as the chemical injection pump 11.

When the detection pressure of the pressure sensor 15 was 0.5MPa or higher, the chemical solution was injected at 200mL/hr, and when it was below 0.5MPa, the chemical injection pump 11 was stopped.

In this Example 1, during the boiler stoppage on Saturday and Sunday, the pressure in the steam system dropped and the chemical injection pump 11 was stopped.

As a result, there was no chemical addition at all during the weekend stoppage of the steam equipment, so there was no odor in the steam and condensed water at the time of restart.

### [Example 2]

In Example 2, the operation was performed in the same manner as in Example 1, except that an anti-siphon check valve 13 was not installed.

In this Example 2 as well, during the boiler stoppage on Saturday and Sunday, the pressure drop in the steam system dropped and the chemical injection pump was stopped. However, due to the absence of an anti-siphon check valve, as the pressure in the steam system dropped, some of the chemicals in the chemical tank were drawn in by negative pressure, resulting in 1 liter of chemicals being added to the system. As a result, the steam and condensed water had a slight odor at the time of restart.

### [Comparative Example 1]

In Comparative Example 1, there was no pressure involvement in the detection of the pressure sensor 15 and even during boiler stoppage, the chemical injection pump 11 continuously injected chemicals at 200 mL/hr. Therefore, chemicals were continuously injected even during the boiler stoppage on Saturday and Sunday (weekend). Additionally, due to the equipment stoppage during the weekend, the boiler operation also stopped, causing the pressure in the system to drop to negative pressure, and some of the chemicals in the chemical tank 10 were drawn into the system. As a result, when the boiler equipment was restarted on Monday after the weekend, the steam and condensed water had an odor. Moreover, upon checking the amount of chemical solution in the chemical tank 10, it was found that despite the boiler equipment being stopped, 13 liters of chemicals had been added to the system in just two days over the weekend.

The disclosure has been described in detail using specific aspects, but it is clear to those skilled in the art that various changes are possible within the range where the effects of the disclosure are achieved.

This application is based on Japanese Patent Application No. 2023-032905 filed on March 3, 2023, the entire contents of which are incorporated herein by reference.

### Reference Signs List

- 1: Boiler
- 5: Heat exchanger
- 10: Chemical tank
- 11: Chemical injection pump
- 13: Anti-siphon check valve
- 15: Pressure sensor
- 16: Controller
- 18: Steam trap
- 19: Steam circulation detection sensor
- 20, 25: Siphon tube
- 22: Pressure switch

## Claims

1. A chemical injection method for steam system for controlling injection of water treatment chemicals into a steam system, in which, in response to
a pressure sensor, a temperature sensor, or a steam trap as a steam circulation detection part provided in the steam system;
a chemical injection pump for injecting the water treatment chemicals into the steam system; and
a steam circulation detection status of the steam circulation detection part,
the injection of the water treatment chemicals by the chemical injection pump is controlled.

2. The chemical injection method for steam system according to claim 1, wherein the steam circulation detection part is a sensor comprising the pressure sensor or the temperature sensor, and wherein the chemical injection pump is operated when a detected value of the sensor is equal to or higher than a threshold, and the chemical injection pump is stopped when the detected value of the sensor is below the threshold.

3. The chemical injection method for steam system according to claim 1, wherein the steam circulation detection part comprises the steam trap and a steam circulation detection sensor of the steam trap, and
the chemical injection pump is operated when the steam circulation detection sensor detects steam circulation, and the chemical injection pump is stopped when the steam circulation detection sensor does not detect the steam circulation.

4. The chemical injection method for steam system according to claim 1, wherein an anti-siphon check valve is provided in a chemical injection piping that leads the water treatment chemicals from the chemical injection pump to the steam system.

5. The chemical injection method for steam system according to claim 1, wherein an installation location of the steam circulation detection part in the steam system, and an injection point of the water treatment chemicals from the chemical injection pump into the steam system are located on a secondary side of a steam flow control valve provided in the steam system.

6. The chemical injection method for steam system according to any one of claims 1 to 5, wherein at an injection point of the water treatment chemicals from the chemical injection pump into the steam system, the water treatment chemicals are injected into the steam system by spraying with a spray nozzle.
